# EUROPÄISCHE PATENTSCHRIFT

(11) **EP 2 957 484 B1**
(45) Veröffentlichungstag und Bekanntmachung des Hinweises auf die Patenterteilung: **15.03.2017**
(21) Anmeldenummer: 15001572.5
(22) Anmeldetag: 23.05.2015
(51) Int. Cl.: B62D 25/16, B60P 3/077

(54) **KOTFLÜGEL FÜR EIN FAHRZEUG, VORZUGSWEISE NUTZFAHRZEUG**
MUDGUARD FOR A VEHICLE, PREFERABLY COMMERCIAL VEHICLE
AILE POUR UN VÉHICULE, DE PRÉFÉRENCE UN VÉHICULE UTILITAIRE

(30) Priorität: 18.06.2014 DE 102014009055
(43) Veröffentlichungstag der Anmeldung: 23.12.2015
(73) Patentinhaber: MAN Truck & Bus AG, 80995 München (DE)
(72) Erfinder: Peter, Andreas, 85375 Neufahrn (DE); Schmidt-Robin, Rolf, 80995 München (DE)
(74) Vertreter: v. Bezold & Partner Patentanwälte - PartG mbB

(56) Entgegenhaltungen:
- EP-A2- 2 397 392
- DE-A1- 10 209 162
- DE-U1- 29 713 006

## Beschreibung

Die Erfindung betrifft einen Kotflügel für ein Nutzfahrzeug, der mit einer der Reifenform angepassten Wölbung, in nach unten zur Fahrbahn gerichteten Schenkeln endet, sowie ein Nutzfahrzeug, z. B. einen Omnibus oder einen Lastkraftwagen, das mit wenigstens einem erfindungsgemäßen Kotflügel ausgerüstet ist.

Üblicherweise werden Radunterlegkeile, nachfolgend auch als Unterlegkeile bezeichnet, als lose Einzelteile in einer Halterung am Rahmen von Nutzfahrzeugen mitgeführt. Der Halter befindet sich für unterschiedliche Nutzfahrzeuge jedoch immer wieder an unterschiedlichen Einbauorten am Rahmen, abhängig von Größe und Ausstattung der Fahrzeuge und je nachdem, wo jeweils Fahrzeugtyp-spezifisch ausreichend Platz zur Anbringung des Radunterlegkeils ist. In der DE 102 09 162 A1 wird beispielsweise vorgeschlagen, eine Außenflanke eines Längsträgers von Sattelanhänger-Fahrgestellrahmen, insbesondere deren Kröpfungsbereich, als Anbringungsort für einen Radunterlegkeil zu verwenden. Nachteilig ist daher, dass Fahrer von Nutzfahrzeugen in Gefahrensituationen den Anbringungsort des Unterlegkeils erst ausfindig machen müssen, um durch Unterlegen des Unterlegkeils ein mögliches Wegrollen des Nutzfahrzeugs zu verhindern.

Ferner ist aus der DE 10 2010 024 409 A1 ein gattungsgemäßer Kotflügel für ein Nutzfahrzeug bekannt, an dessen Außenseite der Kotflügelwölbung ein zur Aufnahme eines Unterlegkeils bestimmter Stauraum mit einer Öffnung angeordnet ist. Die Anbringung des Unterlegkeils in direkter Nähe des Reifens erleichtert die Handhabung für den Fahrer. Nachteilig hierbei ist jedoch, dass an der Außenseite des Kotflügels zusätzlicher Bauraum beansprucht wird.

Weitere ähnliche Beispiele sind aus EP2397392 und DE29713006U bekannt.

Es ist somit eine Aufgabe der Erfindung, eine verbesserte Anbringmöglichkeit an Fahrzeugen für einen Unterlegkeil bereitzustellen, mit dem Nachteile herkömmlicher Anbringungstechniken vermieden werden können. Die Aufgabe der Erfindung ist es insbesondere, einen Anbringungsort am Fahrzeug schaffen, an dem ein Unterlegkeil unabhängig von der Größe und Ausstattung standardmäßig angeordnet werden kann und dabei möglichst wenig Bauraum beansprucht.

Diese Aufgaben werden durch einen Kotflügel bzw. einem Radkasten eines Fahrzeugs mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gegebenenfalls wird im Rahmen der vorliegenden Erfindung statt des Begriffs "Kotflügel" auch der Begriff "Radkasten" verwendet. Beide Begriffe sind im Rahmen der vorliegenden Erfindung als gleichbedeutend anzusehen.

Erfindungsgemäß wird ein Kotflügel für ein Fahrzeug, vorzugsweise Nutzfahrzeug, vorgeschlagen, der mit einer der Reifenform angepassten Wölbung in nach unten zur Fahrbahn gerichteten Schenkeln endet, wobei die Wölbung eine Ausnehmung aufweist, nachfolgend auch als Aussparung bezeichnet, in der der Radunterlegkeil abnehmbar halterbar ist und/oder gehaltert ist.

Gemäß allgemeinen Gesichtspunkten der Erfindung ist der Unterlegkeil somit in den Kotflügel bzw. den Radkasten des Fahrzeugs integriert. Hierbei kann die Integration über eine Bauteilintegration erfolgen, derart, dass der Unterlegkeil im gehalterten Zustand einen funktionalen Teil des Kotflügels ausbildet, z. B., indem der Unterlegkeil einen Teil der dem Reifen zugewandten Wandung des Kotflügels ausbildet. Alternativ besteht auch die Möglichkeit einer Bauraumintegration, wobei der Unterlegkeil in einen Teil des Kotflügels selbst integriert ist und z. B. auf einem Teil der dem Reifen zugewandten Wandung des Kotflügels aufliegt.

Ein besonderer Vorzug der Erfindung liegt somit darin, dass die Unterlegkeile immer einen fest definierten Anbringungsplatz am Fahrzeug haben und ferner keinen zusätzlichen Bauraum anderweitig am Fahrzeug in Anspruch nehmen. Die Integration in den Kotflügel bietet ferner den Vorteil, dass ein Unterlegkeil direkt in Nähe des Reifens angebracht ist, was die Handhabung für den Fahrer erleichtert. Ein weiterer Vorteil ist, dass sich derart gehalterte Unterlegkeile ansprechend und unauffällig in das Design und die Gesamterscheinung des Fahrzeugs einfügen können.

Besonders vorteilhaft ist, wenn die Kontur des Unterlegkeils in den durch die Ausnehmung vorgegebenen Bauraum eingepasst ist, was eine besonders kompakte Ausführung ermöglicht.

Ferner kann eine Halteeinrichtung zur Halterung des Kotflügels vorgesehen sein, die sich in Horizontalrichtung in die Ausnehmung erstreckt, und der Radunterlegkeil kann eine Durchgangsöffnung aufweisen, die ausgeführt ist, die Halteeinrichtung zumindest bereichsweise aufzunehmen. Dadurch kann ein einfach zu handhabender und platzsparender Halterungsmechanismus bereitgestellt werden.

Bei einer vorteilhaften Variante dieser Ausgestaltungsform ist die Ausnehmung im Bereich eines Kotflügelträgers bzw. einer Kotflügelstütze vorgesehen, wobei die Kotflügelstütze gleichzeitig als die Halteeinrichtung dient. Dies bieten den Vorteil, dass keine separate Halteeinrichtung vorgesehen werden muss, sondern der bestehende am Fahrzeugrahmen befestigte Kotflügelträger zusätzlich zur Halterung des Unterlegkeils genutzt werden kann.

Der Kotflügelträger kann als zylinderförmiger Haltebolzen ausgeführt sein, der an einem Fahrzeugrahmenlängsträger eines Nutzfahrzeugs befestigt ist und sich in Horizontalrichtung erstreckt.

Es wurde vorstehend bereits erwähnt, dass der Unterlegkeil in den Kotflügel bzw. den Radkasten des Fahrzeugs integriert ist und hierbei einen funktionalen Teil des Kotflügels ausbilden kann. Gemäß dieser Variante kann der Radunterlegkeil im in der Ausnahme gehalterten Zustand einen Teil der Innen- und/oder Außenfläche des Kotflügels ausbilden und/oder als integraler funktionaler Bauteilbereich des Kotflügels ausgebildet sein. Beispielsweise kann der Unterlegkeil zusammen mit einer dem Reifen zugewandten Innenfläche des Kotflügels eine Reifenüberdeckung ausbilden. Ein Unterlegkeil in Verwendung mit dem erfindungsgemäßen Kotflügel kann somit eine Doppelfunktion ausfüllen: Der Unterlegkeil kann am Rad angeordnet als herkömmlicher Rad-Wegrollschutz dienen und im gehalterten Zustand eine Kotflügelschutzfunktion übernehmen. Dies reduziert den Materialaufwand für den Kotflügel und den benötigten Bauraum am Fahrzeug.

Eine besonders kompakte Anordnung ist realisierbar, wenn der Radunterlegkeil im in der Ausnahme gehalterten Zustand einen Teilabschnitt einer der nach unten zur Fahrbahn gerichteten Schenkel ausbildet, wobei eine dem Reifen zugewandte Innenfläche des Kotflügels teilweise aus einer Rad-Stützfläche des Radunterlegkeils gebildet wird. Die Innenfläche des Kotflügels bzw. des Radkastens setzt sich im gehalterten Zustand des Unterlegkeils somit aus der Innenfläche der Wölbung und der Rad-Stützfläche des Unterlegkeils zusammen, wobei die Rad-Stützfläche des Unterlegkeils die durch die Ausnehmung entstehende Aussparung in der Innenfläche puzzleartig schließt.

Es wurde vorstehend bereits erwähnt, dass der Unterlegkeil in den Bauraum des Kotflügels bzw. des Radkastens des Fahrzeugs integriert sein kann. Hierbei kann eine dem Reifen zugewandte Innenfläche des Kotflügels im Bereich der Ausnehmung als Auflagefläche für eine Rad-Stützfläche des Radunterlegkeils ausgebildet sein. Diese Variante bietet den Vorteil, dass die Innenfläche der Wölbung spaltfrei ausgeführt ist und gleichzeitig als Abstützung für den gehalterten Unterlegkeil dient.

Für eine optimale Bauraumausnutzung ist es ferner möglich, dass eine Breite der Ausnehmung der Wölbung im Wesentlichen einer Breite des Radunterlegkeils entspricht und/oder dass ein erster Teil eines Rückens des Radunterlegkeils im gehalterten Zustand unter die Wölbung geschoben ist und ein zweiter Teil, aufweisend einen Handgriff, freiliegt. Der Unterlegkeil kann dabei so angeordnet sein, dass sein Rücken nach oben weist.

Eine Möglichkeit der erfindungsgemäßen Realisierung sieht ferner vor, dass an einem Rand der Ausnehmung eine Arretierung für den gehalterten Radunterlegkeil vorgesehen ist. Damit kann der gehalterte Unterlegkeil für den Fahrbetrieb sicher fixiert werden. Bei einer vorteilhaften Variante dieser Ausgestaltungsform ist die Arretierung als Haltenase bzw. Rastnase ausgebildet ist, die ausgeführt ist, im gehalterten Zustand des Radunterlegkeils einen Handgriff des Radunterlegkeils einrastbar umgreifen zu können.

Die Erfindung ist hinsichtlich der Fahrzeugachse nicht auf eine bestimmte Achse beschränkt. Der erfindungsgemäße Kotflügel kann an einer beliebigen Achse (Vorderachse, Hinterachse, Vor- und Nachlaufachse) vorgesehen sein. Ferner ist die Anzahl der vorgesehenen Unterlegkeile variabel. Es können ein oder mehrere erfindungsgemäße Kotflügel mit einem Unterlegkeil pro Fahrzeug vorgesehen sein. Ferner kann als Einbauseite die rechte oder die linke Fahrzeugseite gewählt werden, wobei für den schnellen Zugriff die Fahrerseite bevorzugt ist.

Die Erfindung betrifft ebenso ein Kraftfahrzeug, vorzugsweise ein Nutzfahrzeug, insbesondere einen Omnibus oder einen Lastkraftwagen, mit einem Kotflügel bzw. Radkasten wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Kotflügels mit einem gehalterten Unterlegkeil gemäß einer Ausführungsform der Erfindung;
- Figur 2: eine schematische Ansicht des Kotflügels aus Figur 1 mit dem Unterlegkeil in einer Rad-Wegroll-Schutz-Stellung;
- Figur 3: eine Detailansicht der Haltenase;
- Figur 4: eine schematische Ansicht eines Kotflügels mit einem gehalterten Unterlegkeil gemäß einer weiteren Ausführungsform der Erfindung; und
- Figur 5: eine schematische Ansicht des Kotflügels aus Figur 4 mit dem Unterlegkeil in einer Rad-Wegroll-Schutz-Stellung.

Gleiche oder funktional äquivalente Elemente sind in allen Figuren mit denselben Bezugszeichen bezeichnet.

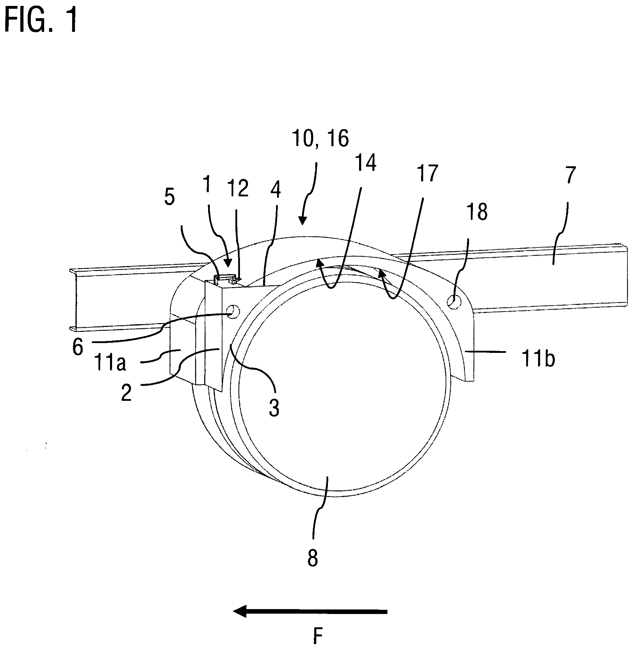

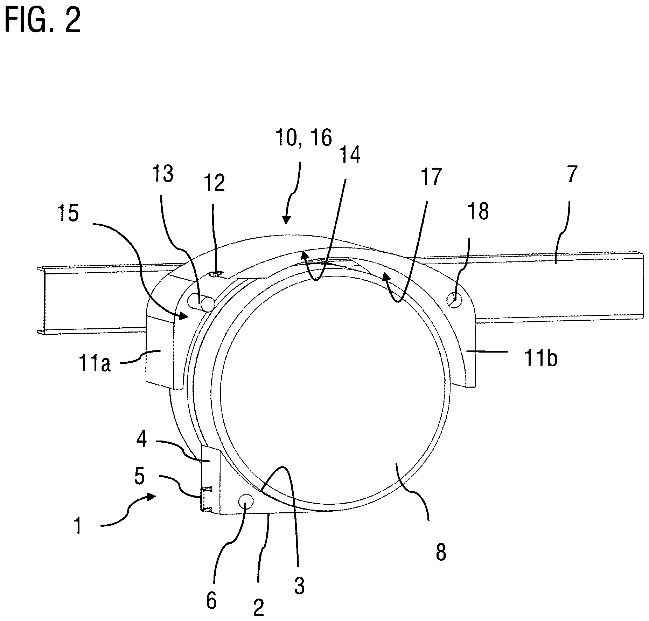

Figur 1 zeigt eine schematische Ansicht eines Kotflügels 10 mit gehaltertem Unterlegkeil 1 gemäß einer Ausführungsform der Erfindung. Der Kotflügel 10 kann an einer als Vorder-, Hinter, Vorlauf- oder Nachlaufachse ausgebildeten Fahrzeugachse (nicht gezeigt) angeordnet sein. Der Kotflügel 10, der mit einer der Reifenform angepassten Wölbung 14 in nach unten zur Fahrbahn gerichteten Schenkeln 11 a, 11 b endet, ist rahmenfest an einem Fahrzeugrahmenlängsträger 7 des Fahrzeugaufbaus über zylinderförmige Kotflügelstützen 13 (siehe auch Figur 2) befestigt. Zur Befestigung an den Kotflügelstützen weisen die Schenkel sich horizontal erstreckende Langlöcher 18 auf, die an den Durchmesser der Kotflügelstützen 13 angepasst sind.

Der Radunterlegkeil 1 ist im Wesentlichen dreiecksförmig ausgebildet, mit einer gerade Bodenfläche 2, einem Rücken 4 und einer gekrümmten Rad-Stützfläche 3, deren Krümmung an die Krümmung der Innenfläche 17 der Wölbung 14 im Bereich des vorderen Schenkels 11a angepasst ist.

Die Wölbung 14 weist eine Ausnehmung 15 auf, in der der Radunterlegkeil 1 abnehmbar gehaltert ist. Die Ausnehmung 15 ist in der Darstellung der Figur 2 besser zu sehen. In dieser Darstellung ist der Unterlegkeil 1 vom Kotflügel 10 abgenommen und in einer Rad-Wegroll-Schutz-Stellung am Rad 8 angeordnet. Durch die Ausnehmung "fehlt" somit ein Teil des Kotflügels 10 bzw. der Wölbung 14 an vorderen Endbereich. Hierbei ist der vordere Schenkel 11a im Vergleich zum hinteren Schenkel 11 b mit geringerer Breite (Erstreckung in Horizontalrichtung) ausgeführt. Die Kontur des Unterlegkeils 1 ist in den durch die Ausnehmung 15 vorgegebenen Bauraum eingepasst. Die Breite der Ausnehmung 15 der Wölbung 14 entspricht beispielsweise im Wesentlichen der Breite des Radunterlegkeils 1.

In den Unterlegkeil 1 ist in seinem Mittenbereich eine Durchgangsöffnung 6 im Form eines Langlochs eingebracht, die quer zur Fahrtrichtung F verläuft. Zur Anbringung des Unterlegkeils 1 an dem Kotflügel 10 wird der Unterlegkeil mittels der Durchgangsöffnung 6 auf den Endbereich der Kotflügelstütze 13 aufgesteckt. In dem gehalterten Zustand ist ein erster Teil des Rückens 4 des Radunterlegkeils 1 unter die Wölbung 14 geschoben, die mit einem die Ausnehmung 15 begrenzenden Randbereich flächig auf diesem ersten Teil des Rückens 4 aufliegt. Ein zweiter Teil des Rücken liegt frei. An diesem Teil ist ein Handgriff 5 befestigt.

Im gehalterten Zustand bildet die Rad-Stützfläche 3 des Unterlegkeils 1 zusammen mit einer dem Reifen 8 zugewandte Innenfläche 17 des Kotflügels 10 eine Reifenüberdeckung aus. Ferner bildet der Radunterlegkeil 1 im in der Ausnahme 15 gehalterten Zustand mit seiner Bodenfläche 2 einen Teilabschnitt des vorderen Schenkelbereichs der Wölbung 14 aus. Der Unterlegkeil 1 weist dabei mit seiner Bodenfläche 2 in Fahrtrichtung F nach vorne. Der Rücken 4 weist nach oben.

Der Radunterlegkeil 1 bildet somit in dem in der Ausnahme 15 gehalterten Zustand einen Teil der Innen- und/oder Außenfläche 16, 17 des Kotflügels 10 aus und ist im Sinne einer Bauteilintegration als integraler funktionaler Bauteilbereich des Kotflügels 10 ausgeführt. Somit übernimmt der Unterlegkeil 1 im Fahrbetrieb ebenfalls die Radschutzfunktionen eines Kotflügels, beispielsweise dient die Rad-Stützfläche 3 als Spritzschutzfläche.

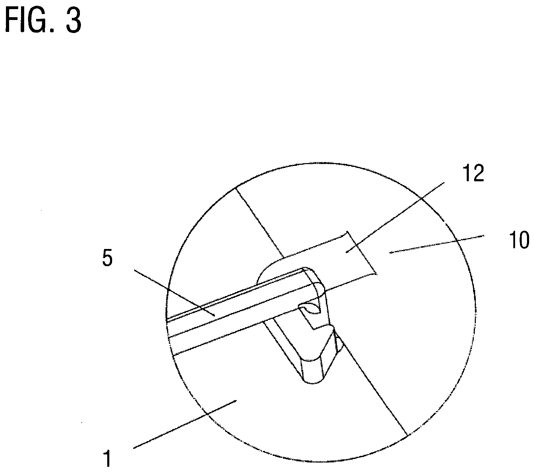

Zur verliersicheren Befestigung ist der Unterlegkeil 11 zusätzlich über eine Haltenase 12 gesichert, die ausgeführt ist, im gehalterten Zustand des Radunterlegkeils 1 den Handgriff 5 des Radunterlegkeils umgreifen zu können und formschlüssig zu sichern. Dies ist in Figur 3 in einer Detailansicht dargestellt.

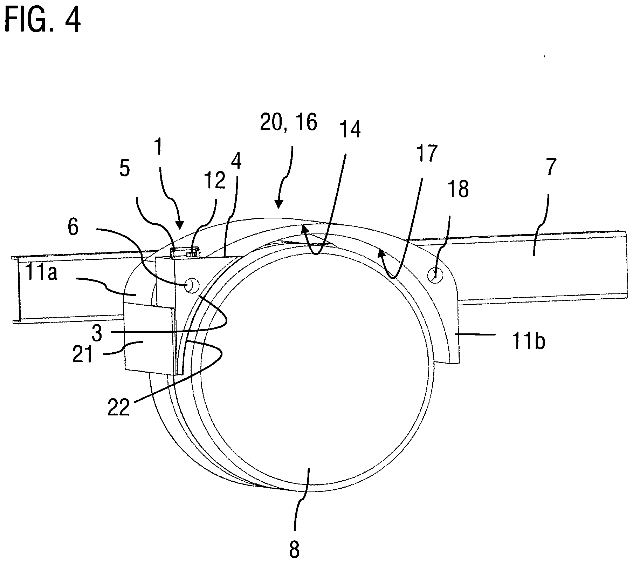

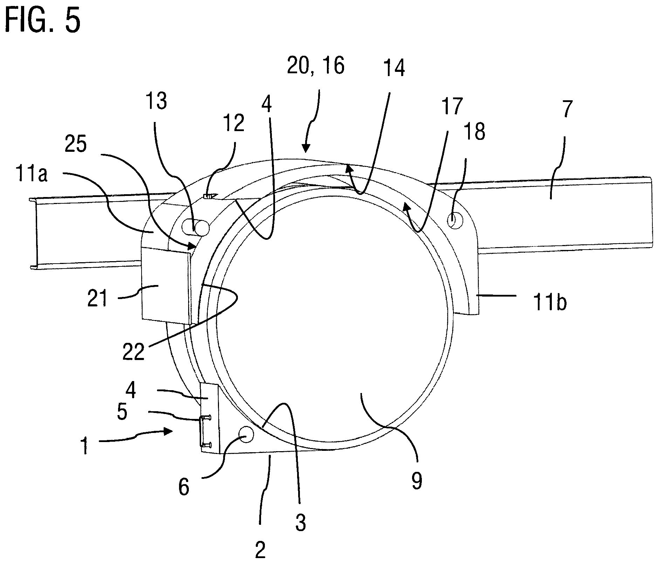

Die Figuren 4 und 5 illustrieren eine weitere Ausführungsform der Erfindung. Hierbei entsprechen Komponenten mit gleichen Bezugszeichen den Komponenten der Figuren 1 und 2 und werden nicht gesondert beschrieben. Die Besonderheit dieser Ausführungsform liegt darin, dass der Unterlegkeil im Sinne einer Bauraumintegration in einen Teil des Kotflügels 20 selbst integriert ist.

Hierzu weist die Wölbung 14 wiederum im Bereich des vorderen Schenkels 11a eine Aussparung 25 auf, die an die Kontur des Unterlegkeils 1 angepasst ist und in der der Radunterlegkeil 1 gemäß Figur 4 abnehmbar gehaltert ist.

Im Unterschied zum Kotflügel 10 der Figuren 1 und 2 weist die konvex-gewölbte Innenfläche 17 keine Aussparung auf, sondern verläuft im Wesentlichen halbkreisförmig durchgehend vom hinteren Schenkel 11 b zum vorderen Schenkel 11a. In dem Bereich der Ausnehmung 25 dient diese als Auflagefläche für eine Rad-Stützfläche 3 des Radunterlegkeils 1. Ferner ist am vorderen Schenkel 11a eine Halteplatte 21 befestigt, die als Halte- und Stützplatte für die Bodenfläche 2 des gehalterten Unterlegkeils 1 dient. Die Breite der Platte 21 entspricht der Breite des hinteren Schenkels 11 b und überdeckt somit die Vorderseite des vorderen Schenkels 11a sowie die Bodenfläche 2 des Unterlegkeils 1.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Radunterlegkeil
- 2: Bodenfläche
- 3: Rad-Stützfläche
- 4: Rücken
- 5: Handgriff
- 6: Durchgangsöffnung
- 7: Rahmenlängsträger
- 8: Reifen
- 10: Kotflügel
- 11a: Vorderer Schenkel
- 11b: Hinterer Schenkel
- 12: Haltenase
- 13: Kotflügelstütze
- 14: Wölbung
- 15: Ausnehmung
- 16: Außenseite
- 17: Innenseite
- 18: Durchgangsöffnung
- 20: Kotflügel
- 21: Halteplatte
- 22: Auflagefläche
- 25: Ausnehmung
- F: Fahrtrichtung

## Patentansprüche

1. Kotflügel (10; 20) für ein Fahrzeug, vorzugsweise Nutzfahrzeug, der mit einer der Reifenform angepassten Wölbung (14) in nach unten zur Fahrbahn gerichteten Schenkeln (11 a, 11 b) endet, **dadurch gekennzeichnet, dass** die Wölbung (14) eine Ausnehmung (15; 25) aufweist, in der der Radunterlegkeil (1) abnehmbar halterbar ist und/oder gehaltert ist.

2. Kotflügel (10; 20) nach Anspruch 1, **dadurch gekennzeichnet, dass** sich eine Halteeinrichtung zur Halterung des Kotflügels in Horizontalrichtung in die Ausnehmung erstreckt und der Radunterlegkeil (1) eine Durchgangsöffnung (6) aufweist, die ausgeführt ist, die Halteeinrichtung zumindest bereichsweise aufzunehmen.

3. Kotflügel (10; 20) nach Anspruch 2, **dadurch gekennzeichnet, dass** die Ausnehmung (15; 25) im Bereich einer Kotflügelstütze (13) vorgesehen ist, die gleichzeitig als die Halteeinrichtung dient.

4. Kotflügel (10) nach einem der vorhergehenden Ansprüche, **dadurch gekennzeichnet, dass** der Radunterlegkeil (1) im in der Ausnahme (15) gehalterten Zustand
(a) einen Teil der Innen- und/oder Außenfläche (16, 17) des Kotflügels (10) ausbildet; und/oder
(b) als integraler funktionaler Bauteilbereich des Kotflügels (10) ausgebildet ist; und/oder
(c) zusammen mit einer dem Reifen (8) zugewandte Innenfläche (17) des Kotflügels (10) eine Reifenüberdeckung ausbildet

5. Kotflügel (10) nach einem der vorhergehenden Ansprüche, **dadurch gekennzeichnet, dass** der Radunterlegkeil (1) im in der Ausnahme (15) gehalterten Zustand einen Teilabschnitt (2) einer der nach unten zur Fahrbahn gerichteten Schenkel (11a) ausbildet, wobei eine dem Reifen (8) zugewandte Innenfläche (17) des Kotflügels (10) teilweise aus einer Rad-Stützfläche (3) des Radunterlegkeils (1) gebildet wird.

6. Kotflügel (20) nach einem der Ansprüche 1 bis 3, **dadurch gekennzeichnet, dass** eine dem Reifen (8) zugewandte Innenfläche (17) des Kotflügels (20) im Bereich der Ausnehmung (25) als Auflagefläche (22) für eine Rad-Stützfläche (3) des Radunterlegkeils (1) ausgebildet ist.

7. Kotflügel (10; 20) nach einem der vorhergehenden Ansprüche, **dadurch gekennzeichnet,**
(a) **dass** eine Breite der Ausnehmung (15; 25) der Wölbung (14) im Wesentlichen einer Breite des Radunterlegkeils entspricht; und/oder
(b) **dass** ein erster Teil eines Rückens (4) des Radunterlegkeils im gehalterten Zustand unter die Wölbung (14) geschoben ist und ein zweiter Teil, aufweisend einen Handgriff (5), freiliegt.

8. Kotflügel (10; 20) nach einem der vorhergehenden Ansprüche, **dadurch gekennzeichnet, dass** an einem Rand der Ausnehmung (15; 25) eine Arretierung für den gehalterten Radunterlegkeil (1) vorgesehen ist.

9. Kotflügel (10; 20) nach Anspruch 8, **dadurch gekennzeichnet, dass** die Arretierung als Haltenase (12) ausgebildet ist, die ausgeführt ist, im gehalterten Zustand des Radunterlegkeils (1) einen Handgriff (5) des Radunterlegkeils umgreifen zu können.

10. Kraftfahrzeug, vorzugsweise Nutzfahrzeug, mit einem Kotflügel nach einem der Ansprüche 1 bis 9.

## Claims

1. Mudguard (10; 20) for a vehicle, preferably a goods vehicle, which, with a curved portion (14) adapted to the tyre form, ends in legs (11a, 11b) directed downward towards the road surface, **characterized in that** the curved portion (14) has a recess (15; 25) in which the wheel chock (1) can be retained and/or is retained removably.

2. Mudguard (10; 20) according to Claim 1, **characterized in that** a holding device for holding the mudguard in the horizontal direction extends into the recess, and the wheel chock (1) has a passage opening (6) which is configured to receive the holding device at least in regions.

3. Mudguard (10; 20) according to Claim 2, **characterized in that** the recess (15; 25) is provided in the region of a mudguard support (13) which serves simultaneously as the holding device.

4. Mudguard (10) according to any of the preceding claims, **characterized in that** the wheel chock (1), in the state retained in the recess (15):
a) forms part of the inner and/or outer face (16, 17) of the mudguard (10); and/or
b) is formed as an integral functional component region of the mudguard (10); and/or
c) together with an inner face (17) of the mudguard (10) facing the tyre (8), forms a tyre cover.

5. Mudguard (10) according to any of the preceding claims, **characterized in that** the wheel chock (1), in the state retained in the recess (15), forms a part segment (2) of a leg (11a) directed downward towards the road surface, wherein an inner face (17) of the mudguard (10) facing the tyre (8) is partially formed from a wheel support face (3) of the wheel chock (1).

6. Mudguard (20) according to any of Claims 1 to 3, **characterized in that** an inner face (17) of the mudguard (20) facing the tyre (8), in the region of the recess (25), is formed as a contact face (22) for a wheel support face (3) of the wheel chock (1).

7. Mudguard (10; 20) according to any of the preceding claims, **characterized in that**
a) a width of the recess (15; 25) of the curved portion (14) substantially corresponds to a width of the wheel chock; and/or
b) a first part of a back (4) of the wheel chock, in the retained state, is pushed below the curved portion (14) and a second part with a handle (5) is exposed.

8. Mudguard (10; 20) according to any of the preceding claims, **characterized in that** a catch for the retained wheel chock (1) is provided on an edge of the recess (15; 25).

9. Mudguard (10; 20) according to Claim 8, **characterized in that** the catch is formed as a retaining lug (12) configured to be able to surround a handle (5) of the wheel chock when the wheel chock (1) is in the retained state.

10. Motor vehicle, preferably a goods vehicle, with a mudguard according to any of Claims 1 to 9.

## Revendications

1. Aile (10; 20) pour un véhicule, de préférence un véhicule utilitaire, qui avec une partie courbe (14) adaptée à la forme du pneu se termine en deux branches (11a, 11b) orientées vers le bas en direction de la chaussée, **caractérisée en ce que** la partie courbe (14) présente un évidement (15; 25), dans lequel la cale de roue (1) peut être et/ou est supportée de façon amovible.

2. Aile (10; 20) selon la revendication 1, **caractérisée en ce qu'**un dispositif de maintien destiné à supporter l'aile s'étend en direction horizontale dans l'évidement et la cale de roue (1) présente une ouverture de passage (6), qui est réalisée de façon à recevoir au moins localement le dispositif de maintien.

3. Aile (10; 20) selon la revendication 2, **caractérisée en ce que** l'évidement (15; 25) est prévu dans la région d'un support d'aile (13), qui sert en même temps de dispositif de maintien.

4. Aile (10) selon l'une quelconque des revendications précédentes, **caractérisée en ce que** la cale de roue (1), dans l'état supporté dans le logement (15)
(a) forme une partie de la surface intérieure et/ou extérieure (16, 17) de l'aile (10); et/ou
(b) est réalisée comme une région de composant fonctionnelle intégrale de l'aile (10); et/ou
(c) forme un recouvrement du pneu avec une surface intérieure (17) de l'aile (10) tournée vers le pneu (8).

5. Aile (10) selon l'une quelconque des revendications précédentes, **caractérisée en ce que** la cale de roue (1) forme, dans l'état supporté dans le logement (15), une partie (2) d'une branche (11a) orientée vers le bas en direction de la chaussée, dans laquelle une surface intérieure (17) de l'aile (10) tournée en direction du pneu (8) est formée en partie par une face de soutien de roue (3) de la cale de roue (1).

6. Aile (20) selon l'une quelconque des revendications 1 à 3, **caractérisée en ce qu'**une surface intérieure (17) de l'aile (20) tournée vers le pneu (8) est réalisée dans la région de l'évidement (25) sous la forme d'une face d'appui (22) pour une face de soutien de roue (3) de la cale de roue (1).

7. Aile (10; 20) selon l'une quelconque des revendications précédentes, **caractérisée en ce que**
(a) une largeur de l'évidement (15; 25) de la partie courbe (14) correspond essentiellement à une largeur de la cale de roue; et/ou
(b) une première partie d'un dos (4) de la cale de roue est glissée à l'état supporté sous la partie courbe (14) et une deuxième partie, présentant une poignée (5), est libre.

8. Aile (10; 20) selon l'une quelconque des revendications précédentes, **caractérisée en ce qu'**il est prévu sur un bord de l'évidement (15; 25) un arrêt pour la cale de roue supportée (1).

9. Aile (10; 20) selon la revendication 8, **caractérisée en ce que** l'arrêt est réalisé en forme d'ergot de retenue (12), qui est réalisé de façon à pouvoir, dans l'état supporté de la cale de roue (1), saisir une poignée (5) de la cale de roue.

10. Véhicule automobile, de préférence véhicule utilitaire, avec une aile selon l'une quelconque des revendications 1 à 9.
